# EUROPEAN PATENT APPLICATION

(11) **EP 1 653 278 A1**
(43) Date of publication of application: **03.05.2006**
(21) Application number: 04748286.4
(22) Date of filing: 02.08.2004
(51) Int. Cl.: G02F 1/377

(54) **BLUE LASER BEAM OSCILLATING METHOD AND DEVICE**

(30) Priority: 06.08.2003 JP 2003206366
(71) Applicant: NGK INSULATORS, LTD., Nagoya-City, Aichi Pref. 467-8530 (JP)
(72) Inventor: IWAI, Makoto, c/o NGK Insulators, Ltd., Nagoya-city, Aichi 4678530 (JP); IMAI, Katsuhiro, c/o NGK Insulators, Ltd., Nagoya-city, Aichi 4678530 (JP); YOSHINO, Takashi, c/o NGK Insulators, Ltd., Nagoya-city, Aichi 4678530 (JP); IMAEDA, Minoru, c/o NGK Insulators, Ltd., Nagoya-city, Aichi 4678530 (JP)
(74) Representative: TBK-Patent
(86) International application number: PCT/JP2004/011399
(87) International publication number: WO 2005/015304

(57) **Abstract**

It is provided system and method of oscillating blue laser beam having a relatively high conversion efficiency and whose output power of the blue laser beam can be improved. Light emitted from a broad area semiconductor laser device 2 of Fabry-Perot type is irradiated into a slab optical waveguide 8 made of a non-linear optical crystal as a fundamental wave "A". Blue laser beam "B" is emitted from the slab optical waveguide 8.

## Description

### Field of the Invention

The invention relates to a method and a system for oscillating blue laser beam.

### BACKGROUND OF THE INVENTION

Blue laser beam of a large output power has been demanded as a light source for a laser display device or the like. The output power is necessarily to be 1W or larger, although the output power depends on the size of the display device. It is further demanded that the light source is small and operates in a high efficiency. It is demanded to operate at a wavelength of, for example, of 450 to 460 nm. The output power of a device for oscillating semiconductor laser directly oscillating blue laser beam is currently only several tens W and even such device cannot be obtained in an open end market.

It is described a method of oscillating blue laser beam by means of wavelength conversion of solid laser in, for example, "Optics Communications : 205 (2002) p 361- 365".

It is further described a method of combination of solid laser and a ridge optical waveguide type wavelength converting device in Japanese patent application 2002-100130 (Japanese Patent publication 2003-2 9 5 2 4 4 : published on October 15, 2003).

### DISCLOSURE OF THE INVENTION

According to a method described in "Optics Communications : 205 (2002) p 361- 365", it is provided a large scale system for oscillating laser beam with a low oscillating efficiency. For example, blue laser beam of 0.84 W was obtained from a pump power of 16.7 W, so that the conversion efficiency of light-light was proved to be 5 percent.

According to Japanese patent publication 2003-295244A, it is possible to improve the conversion efficiency of light-light. The output power of the blue laser beam is 250 mW, however, it is difficult to obtain an output power of the order of Watts at present. The reasons are as follows. When a fundamental wave having a large power is irradiated into a ridge type optical waveguide, the power density of light confined in the optical waveguide becomes too large, so that the output power of the blue laser beam becomes unstable, which is problematic.

For example, potassium lithium niobate crystal has a small absorption band for blue light. A part of the blue light oscillated from the potassium lithium niobate crystal is thus absorbed inside of the device to generate heat in the device itself. The conditions for phase matching (phase matching wavelength) of the potassium lithium niobate crystal is fluctuated depending on the temperature of the device. As the temperature of the device is raised due to the heat generated therein as described above, the phase matching wavelength is thereby changed to lower the oscillation efficiency and output power of the blue light. As the output power of the blue light is lowered, the heat generation inside of the device is reduced so that the temperature of the device is lowered. As a result, the phase matching condition of the device is turned to the initial condition so that the oscillation efficiency and output power of the blue light from the device are increased. It is considered that the cycles are repeated in the device so that the output power of the blue light from the device is fluctuated and unstable. This kind of fluctuation of the output power has not been considered problematic, because the above cycles have not been found in prior wavelength converting devices whose power of the fundamental wave is low.

It has been further studied to use a slab optical waveguide for lowering the power density in the ridge type optical waveguide. When an off-cut substrate made of, for example, single crystal of MgO-doped lithium niobate is used, however, the length of polarization conversion is about 50 µm as the maximum, so that the slab width would be 30 µm as the maximum. It has been thus difficult to lower the power density of light in the optical waveguide.

An object of the present invention is to provide a method and a system for oscillating blue laser beam, having a relatively high conversion efficiency and an improved output power of the blue laser beam.

The present invention provides a method of oscillating blue laser beam comprising the step of:
irradiating a light emitted from a device of oscillating broad area semiconductor laser and of Fabry-Perot type into a slab optical waveguide comprising a non-linear optical crystal as a fundamental wave so that a blue laser beam is oscillated from said slab optical waveguide.

The present invention further provides a system of oscillating blue laser beam, said system comprising:
a device of oscillating broad area semiconductor laser and of Fabry-Perot type; and
a slab optical waveguide comprising a non-linear optical crystal,
wherein said device oscillates a laser beam irradiated into the slab optical waveguide as a fundamental wave so that a blue laser beam is oscillated from the slab optical waveguide.

The present inventors have reached the idea of increasing the ridge width of a wavelength converting device using a ridge type optical waveguide made of a non-linear optical crystal to provide a slab optical waveguide and irradiating a laser beam from a broad area semiconductor laser oscillating device of Fabry-Perot type into the slab optical waveguide as a fundamental wave.

The present invention utilizes a slab type optical waveguide made of a non-linear optical crystal and not of polarization conversion system. According to an optical waveguide of polarization conversion system, the slab width cannot be made large due to the reasons described above, so that the optical power density cannot be thus lowered and the width of wavelength of fundamental wave permitted for the conversion is very narrow. According to the present invention, a slab type optical waveguide made of a non-linear optical crystal is used, so that the slab width can be made larger to reduce the optical power density and the width of the wavelength of fundamental wave permitted for the wavelength conversion can be made larger.

At the same time, the output beam emitted from a broad area semiconductor laser device of Fabry-perot type is used as the fundamental wave. A broad area semiconductor laser of Fabry-Perot type emits laser beam having a wide range of wavelength and a high power. Such laser is combined with a slab optical waveguide made of a non-linear optical crystal and having a wide range of permitted wavelength, so that the fundamental wave of a large power can be used and the density of the optical power can be reduced. Moreover, there is no particular limit on the slab width of the slab optical waveguide. The size of a emitter of a broad area semiconductor laser device of Fabry-Perot type can be adjusted to the slab width of the slab optical waveguide to improve the efficiency of connection of light. It is thus possible to obtain blue laser beam of a large output power and to prevent a reduction of the conversion efficiency of light-light at the same time.

### BRIEF DESCRIPTION OF THE DRAWINGS

Fig. 1 is a diagram schematically showing a system 1 for oscillating blue laser beam, according to the present invention.
Fig. 2 is a graph showing the relationship between the output powers of a fundamental wave and blue laser beam.

### Preferred embodiments of the invention

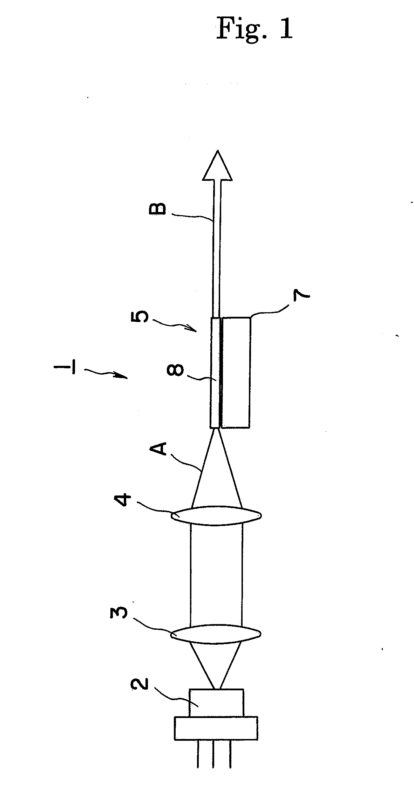

Fig. 1 is a diagram schematically showing an oscillation system 1 according to the present invention. An output ray "A" emitted from a broad area semiconductor laser device 2 of Fabry-Perot type is condensed with optical systems 3 and 4 and then irradiated into a wavelength conversion device 5. The wavelength conversion device 5 has a substrate 7 and a slab optical waveguide 8. A harmonic wave "B" is output from the slab optical waveguide 8 as an arrow "B".

The inventive device oscillates blue laser beam whose central wavelength is, for example, 390 to 540 nm. A device for oscillating light of this kind of short wavelength may be used in a variety of applications such as an optical disk memory device, medical use, optochemical use, various kinds of optical measurements or the like.

The non-linear optical crystal is not particularly limited as far as the crystal is capable of converting the wavelength of light. The non-linear optical crystal may preferably be a crystal having tungsten bronze structure containing potassium and lithium. More preferably, the crystal may be potassium lithium niobate or a solid solution of potassium lithium niobate and potassium lithium tantalate. Nb, Ta, K or Li may be used as a dopant as far as the crystal maintains the tungsten bronze structure. For example K or Li atoms may be substituted with Na or Rb. In this case, the ratio of the substitution may preferably be 10 atomic percent or lower with respect to 100 atomic percent of potassium or lithium. Further, an alkali metal or alkali earth metal may be added to potassium lithium niobate or a solid solution of potassium lithium niobate and potassium lithium tantalate. Further, the non-linear optical crystal may contain a rare earth element acting as an additive for laser oscillation such as Cr, Er, Nd or the like.

A slab optical waveguide may be defined as a waveguide having a function of confining light in a specified direction (horizontally in the case shown in Fig. 1) when the waveguide is observed in a cross section perpendicular to a direction of light propagation. The waveguide functions to propagate one or more propagating mode of light. Light of slab propagation-mode means light propagating in the slab type or two-dimensional optical waveguide while confined in a specified direction (horizontally in the case shown in Fig. 1). The light of slab propagation mode is usually propagated in multi mode, that is, propagated in a plurality of waveguide modes.

The thickness of a slab optical waveguide is not particularly limited. The thickness may be designed so that a maximum efficiency is obtained, based on the wavelength of light used, and the condensing efficiency of light propagating in the slab optical waveguide. For example, the thickness of a slab optical waveguide may preferably be 10 µm or smaller and more preferably be 5 µm or smaller, on the viewpoint of the propagation efficiency of light. When a slab optical waveguide is too thin, however, light of off-mode is leaked due to the cut-off. The thickness of a slab optical waveguide may preferably be not smaller than 2 µm on this viewpoint.

The material of the substrate 7 is not particularly limited, and includes lithium niobate, lithium tantalate, magnesium oxide, aluminum oxide, strontium titanate and a glass. Alternatively, the substrate 7 may be formed of the non-linear optical crystal as described above.

The thermal expansion coefficient "C" of the non-linear optical crystal and the thermal expansion coefficient "S" of the material forming the substrate 7 may preferably be close to each other. It is thus possible to obtain stable oscillation property and excellent reliability of harmonic wave when the inventive device is used under high or low temperature condition other than room temperature. On the viewpoint, the ratio (S/C) of the thermal expansion coefficient "S" of the material of the substrate with respect to the thermal expansion coefficient "C" of the non-linear optical crystal may preferably be 0.6 to 1.4 and more preferably be 0.85 to 1.15.

The slab optical waveguide 8 may be formed by subjecting the surface area of a substrate 7 to titanium diffusion process or proton exchange process.

Alternatively, the slab optical waveguide may be formed by joining a plate-shaped body made of a non-linear optical crystal and a substrate 7 and by grinding the plate-shaped body. In this case, the plate-shaped body and the substrate 7 may be joined with each other by the following methods.
(1) They are joined with each other with an organic adhesive (for example, epoxy resin, acrylic resin, polyurethane resin, polyimide resin or silicone resin)
(2) They are joined with each other with an inorganic adhesive (for example, a low melting point glass)
(3) The plate-shaped body and substrate 7 are joined with each other by means of diffusion bonding, press bonding, or optical contact.

Alternatively, the slab optical waveguide may be formed by forming a thin film made of potassium lithium niobate on a plate-shaped substrate. The method of forming the thin film includes MOCVD process, for example.

The broad area-semiconductor laser of Fabry-Perot type is known and described, for example, in ┌high output power semiconductor laser for exciting solid state laser┘ (Second symposium of ┌Techniques for measurement and processing of photons┘ , pages 90 to 93). Further, the laser includes products of trade names of ┌S L D 3 2 3 X T┘┌S L D 3 4 3 Y T┘ and ┌S L D 3 4 4 Y T┘ (supplied by Sony Corporation).

The device of the present invention may further comprise a reflection grating part for fixing the wavelength of light irradiated into the optical waveguide layer and a means for controlling temperature of the optical waveguide layer.

### EXAMPLES

### (Production of a slab optical waveguide)

A plate-shaped body made of potassium lithium niobate of Z-cut and having a length of 15 mm, a width of 15 mm and a thickness of 0.5 mm was prepared. The plate-shaped body was prepared by means of micro pull-down method. A supporting body 7 made of soda glass and having a length of 20 mm, a width of 20 mm and thickness of 1 mm was also prepared. The joining faces of the plate-shaped body and substrate 7 were subjected to chemical machinery polishing to improve the flatness to a value of 0.5 µm or lower. An adhesive of thermosetting type was used to join them at 150 °C to obtain a joined sample. The thickness of the adhesive layer between the substrate 7 and plate-shaped body was about 0.5 µm. The potassium lithium niobate substrate was subjected to chemical and mechanical polishing to form a slab optical waveguide 8 having a thickness of about 3 µm and a width of 100 µm. The thus obtained joined sample was cut by a dicer to obtain a chip having a length of 3.5 mm. Both end faces of the chip was subjected to optical polishing. The resulting chip was further cut with a dicer to obtain a device 5 having a width of 2 mm, a thickness of 1.5 mm and a length of 3 mm. Both sides of the devices were coated with anti-reflective (AR) coatings, respectively, with respect to wavelengths of 920 and 460 nm.

The device 5 was used to oscillate a second harmonic wave. It was used a broad area semiconductor laser of Fabry-Perot type (having a size of emitter of 100 µm X 1 µm) oscillating at a wavelength of 920 nm. The laser was optically connected with the slab optical waveguide with lenses 3 and 4.

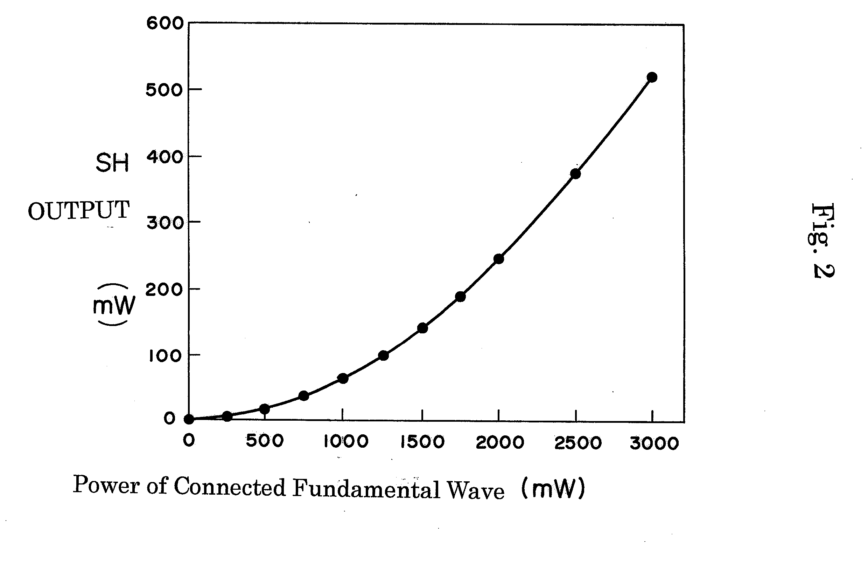

As a result, harmonic wave having a wavelength of 460 nm was oscillated. The output power of the fundamental wave "A" was changed as shown in Fig. 2. As a result, the output power of the second harmonic wave is increased in proportion to the square of the power of the fundamental wave. Blue laser beam of an output power of 520 mW was oscillated when the fundamental wave had an output power of 3 W.

As described above, the present invention provides a method and system of oscillating blue laser beam, having a relatively high conversion efficiency and whose output power of the blue laser beam can be improved.

## Claims

1. A method of oscillating blue laser beam, said method comprising the step of:
irradiating a light emitted from a device of oscillating broad area semiconductor laser and of Fabry-Perot type into a slab optical waveguide comprising a non-linear optical crystal as a fundamental wave so that a blue laser beam is oscillated from said slab optical waveguide.

2. The method of claim 1, wherein said non-linear optical crystal comprises potassium lithium niobate crystal or a crystal of a solid solution of potassium lithium niobate and potassium lithium tantalate.

3. A system of oscillating blue laser beam, said system comprising:
a device of oscillating broad area semiconductor laser and of Fabry-Perot type; and
a slab type optical waveguide comprising a non-linear optical crystal,
wherein said device oscillates a laser beam irradiated into said slab optical waveguide as a fundamental wave so that a blue laser beam is oscillated from said slab optical waveguide.

4. The system of method of claim 3, wherein said non-linear optical crystal comprises potassium lithium niobate crystal or a crystal of a solid solution of potassium lithium niobate and potassium lithium tantalate.
